(19) **Europäisches Patentamt**

**European Patent Office**

**Office européen des brevets**

(11) **EP 1 642 087 B1**

(12) **EUROPEAN PATENT SPECIFICATION**

(45) Date of publication and mention
of the grant of the patent:
**27.12.2006 Bulletin 2006/52**

(21) Application number: **04745201.6**

(22) Date of filing: **07.07.2004**

(51) Int Cl.:
**G01C 11/06** (2006.01)   **G08B 17/12** (2006.01)

(86) International application number:
**PCT/IT2004/000376**

(87) International publication number:
**WO 2005/005926 (20.01.2005 Gazette 2005/03)**

(54) **METHOD AND APPARATUS FOR AUTOMATICALLY DETECTING AND MAPPING, PARTICULARLY FOR BURNT AREAS WITHOUT VEGETATION**

VERFAHREN UND VORRICHTUNG ZUR AUTOMATISCHEN DETEKTIERUNG UND ABBILDUNG, INSBESONDERE FÜR VEGETATIONSLOSE BEREICHE

METHODE ET APPAREIL DE DETECTION ET DE CARTOGRAPHIE AUTOMATIQUES, NOTAMMENT POUR DES ZONES BRULEES EXEMPTES VEGETATION

(84) Designated Contracting States:
**AT BE BG CH CY CZ DE DK EE ES FI FR GB GR HU IE IT LI LU MC NL PL PT RO SE SI SK TR**

(30) Priority: **09.07.2003 IT RM20030336**

(43) Date of publication of application:
**05.04.2006 Bulletin 2006/14**

(73) Proprietors:
• **Ferrucci, Fabrizio**
  **87036 Rende (CS) (IT)**
• **Hirn, Barbara Rosalie**
  **87036 Rende (CS) (IT)**

(72) Inventors:
• **Ferrucci, Fabrizio**
  **87036 Rende (CS) (IT)**
• **Hirn, Barbara Rosalie**
  **87036 Rende (CS) (IT)**

(74) Representative: **Iannone, Carlo Luigi et al**
  **Barzanò & Zanardo Roma S.p.A.**
  **Via Piemonte 26**
  **00187 Roma (IT)**

(56) References cited:
  **EP-A- 1 048 928**      **WO-A-97/35433**
  **US-A1- 2002 026 431**      **US-B1- 6 549 828**

**EP 1 642 087 B1**

**Description**

The present invention refers to an automatic method of detecting and mapping, particularly for burnt areas without vegetation, enabling, in a precise, simple, versatile, reliable, and efficient way, the discrimination of areas, in images acquired from satellite, where fires occurred on the basis of a comparison of images overcoming possible problems of dishomogeneity arising in the case when the conditions of acquisition of the images to be compared are different. More in particular, the automatic mapping method is based on the multi-temporal analysis of multi spectral data, or on the changes in the spectral response of the Earth features in combined near infrared, or NIR (Near Infra-Red), and short wave infrared, or SWIR (Short Wave Infra-Red), or medium infrared, or MIR (Medium Infra-Red), windows of the electromagnetic spectrum.

The present invention further refers to an apparatus performing such a method, which is simple, fast, and inexpensive.

A spaceborne hot temperature event detection arrangement is described in document EP-A-1 048 928.

Multi spectral radiometers are generally constituted by one or more passive optical sensors that register the radiance emitted by the Earth in various windows of the electromagnetic spectrum.

The principal windows of the electromagnetic spectrum commonly used for land and vegetation analysis are the Visible (with wavelength from 0.4 $\mu$m to 0.7 $\mu$m, hereinafter referred to as VIS), the Near Infra-Red (with wavelength from 0.7 $\mu$m to 1.3 $\mu$m, hereinafter referred to as NIR), the Short Wavelength Infra-Red (with wavelength from 1.3 $\mu$m to 2.5 $\mu$m, hereinafter referred to as SWIR), the Medium Infra-Red (with wavelength from 2.5 $\mu$m to 4.5 $\mu$m, hereinafter referred to as MIR), and the Thermal Infra-Red (with wavelength up to 14.5 $\mu$m, hereinafter referred to as TIR).

Radiometers operating at these wavelengths are installed on airborne platforms - such as microlights, airplanes, balloons and dirigibles, operating between the ground free surface and the stratosphere - and spaceborne platforms, including all type of orbiting and sub-orbital spacecrafts at altitudes up to about 36.000 Km above the Earth's ground free surface.

All the afore-said systems look at the Earth orthogonally to the direction of the platform's motion with an angle ranging from 0 to 35 degrees with respect to Nadir - that is, perpendicularly to the Earth. The aforementioned angle is called "Off Nadir".

With such system, resolution cells or grids of the Earth surface can be generated with a spatial resolution (that is, the spacing of the elementary area, or pixel, within which it is possible to distinguish two objects) ranging from few centimetres to several kilometres.

The main characteristic of multi spectral radiometers is that they are coherent imaging systems. This means that they allow measuring radiated energy of each Earth surface cell at different wavelengths, as well as measuring the difference in radiated energy between two independent cells in each wavelength.

In theory, converting radiance in reflectance allows measuring the time variation in energy at each wavelength and in each Earth surface cell, and measuring the time variation of energy difference between two independent cells at each wavelength.

Considering an uniform Lambertian surface, and a cloudless atmosphere, and neglecting the fraction of the upward radiation backscattered downwards again by the atmosphere, the surface reflectance value p is related to radiance $L_{sen}$ measured at the sensor by the following equation:

$$\rho = \pi\,(L_{sen}\text{-}L_p)/[d^2\,T_v\,(T_z\,E_0\cos(\theta_z)+E_d)] \quad [1]$$

In equation [1], Lp is the path radiance (that is the additional radiance due to the path in the atmosphere and hence to the diffusion or scattering phenomenon), $E_d$ is the downward irradiance, $E_0$ is exo-atmospheric solar irradiance, and $\theta_z$ is the solar zenith angle. The atmospheric transmittance $T_v$ from the target toward the sensor depends on the off-nadir angle. The atmospheric transmittance $T_z$ in the illumination direction is a function of $\theta_z$, and of the optical thickness to be accounted for in Rayleigh scattering and atmospheric aerosol effects. Finally, d is the radius vector in astronomic units, given by

$$d = 1\,/\,\{1\text{-}0.016729\,*\,cos\,[0.9856\,(DOY\text{-}4)]\},$$

where DOY is the Day Of the Year.

Radiance Lp can be evaluated by using the so-called Dark Object Subtraction or DOS method, which, as shown by P.S. Chavez in "An improved Dark-Object Subtraction Technique for Atmospheric Scattering Correction of Multispectral Data", Remote Sensing of the Environment 24, pp. 459-479, 1988, relies upon the hypothesis that some ground types - as some types of rocks and soils - behave as almost perfect "black bodies": in such cases, the associated reflectance measured at the satellite is almost entirely due to scattered path reflectance. Atmospheric radiative transfer codes (*Lowtran, Modtran, Code-6S,* etc.) make use of standard atmosphere models, or of available measures of vertical atmosphere profiles, for determining the downward irradiance $E_d$. Finally, the accuracy of atmospheric corrections for Rayleigh scattering and aerosol effects strictly depend upon the availability of data on atmosphere physical and chemical parameters at the precise time of the remote sensing image acquisition

In case of multi-temporal analysis, the fundamental key is to distinguish reflectance changes originated by illumination and atmospheric conditions, by sensor drift or by sensor differences, from reflectance changes due to decrease in biomass content, to chlorophyll absorption, to water content and to density in the vegetation cover. A method for separating changes due to intrinsic reflectance value of vegetation from changes due to other factors influencing the at-satellite reflectance, is that of identifying "pseudo-invariant" features to be used as "reference targets" in cross-rectification of reflectance in different images. Identification of "pseudo-invariant" features requires accurate analysis of the whole of remote sensing data involved in the multi temporal analysis, following a linear radiometric transformation and aimed to implement relative reflectance retrieval. Accuracy of radiometric rectification strongly depends on the selection of pseudo-invariant features or of reference targets.

A large number of algorithms and processings intended for mapping burnt areas starting from multi spectral remote sensing data were carried out on single date image analysis, on the basis of so-called Principal Components, band ratio or vegetation index, unsupervised or supervised classification clustering. However, use of a single remote sensing image for mapping burnt and de-vegetated areas does not allow these ones to be distinguished from urban areas, water surfaces, sparsely vegetated areas and rock outcrops.

Multi-temporal methods based on the evaluation of changes of the spectral response between NIR and SWIR channels seem advantageous, since fire is an agent of land cover alteration, and therefore change detection methods reduce the likelihood of confusion with non vegetated or low vegetated static land cover types, such as urban areas, and rock outcrops

Multi temporal analysis were performed through Principal Component analysis followed by maximum likelihood classification, band ratio or vegetation index as NDVI index (Normalized Difference Vegetation Index) variations. The reflectance variation in areas passing from pre-fire situation to post-fire situation is strictly related to the vegetation type and the originally present biomass content. If only changes in reflectance response were considered, confusion may be then made between variations due to fire damage and variations due to hydric stress or seasonal vegetation changes.

It is therefore an object of the present invention to provide an automatic method capable to significantly improve the unsteadiness, and hence the poor reliability, of present processing techniques, allowing detecting, measuring, and mapping burned and de-vegetated areas in a precise, simple, versatile, reliable, and efficient way.

It is specific subject matter of this invention an automatic method of detecting and mapping, particularly for burnt areas without vegetation, in $N$ images $A_i$, with $N \geq 2$, for $i = 1, 2,..., N$, obtained from data acquired along a certain time period on the same geographical area by means of one or more spectral passive radiometers on one or more detection frequency channels, each image $A_i$ comprising a same plurality of resolution cells or pixels $p_{xy}$, the reflectance $\rho$ of each one of said one or more channels being available for each image, characterised in that it comprises the following steps:

B. for each pair of successive images $A_i$ and $A_{i+1}$, for $i = 1, 2,..., N$-1, assuming as Permanent Reflectors PRs the resolution cells $p_{xy}$ which have optical and electromagnetic properties constant in both images;

C. for each pair of successive images $A_i$ and $A_{i+1}$, for $i = 1, 2,..., N$-1, calculating the mean $M_{PR\_P\_i}$ and the standard deviation $\sigma_{PR\_P\_i}$ of one or more first quantities depending on the variation, from the $i$-th image $A_i$ to the time successive ($i$+1)-th image $A_{i+1}$, of one or more second quantities depending on at least one reflectance $\rho$ of the Permanent Reflectors PRs in said one or more channels;

D. calculating the difference ($M_{PR\_Pi} - \sigma_{Pi}$) between the mean $M_{PR\_P\_i}$ and the standard deviation $\sigma_{PR\_P\_i}$, calculated in step C, for each one of said one or more first quantities;

E. calculating the mean values $M_{PR\_\rho}$ of said one or more second quantities, depending on at least one reflectance $\rho$ of the Permanent Reflectors PRs in said one or more channels, in each one of the second images $A_{i+1}$ of the pairs of successive images ($A_i$ and $A_{i+1}$), for $i = 1, 2,..., N$-1;

F. for each resolution cell $p_{xy}$, calculating said one or more first quantities, already considered in step C for the Permanent Reflectors PRs, depending on the variation, from the $i$-th image $A_i$ to the time successive ($i$+1)-th image $A_{i+1}$, of said one or more second quantities depending on at least one reflectance $\rho$ of the pixels $p_{xy}$ in said one or more channels;

G. determining a first set $S_1$ of resolution cells $p_{xy}$ of the image $A_{i+1}$, comprising the resolution cells $p_{xy}$ of the image $A_{i+1}$ for which said one or more first quantities calculated in step F are lower, in each one of said one or more channels, than the difference ($M_{PR\_Pi}$ - $\sigma_{Pi}$) calculated in step D for each corresponding quantity of said one or more first quantities related to the Permanent Reflectors PRs;

H. determining a second set $S_2$ of resolution cells $p_{xy}$ of the image $A_{i+1}$ comprising the resolution cells $p_{xy}$ of the image $A_{i+1}$ (for $i$ = 1, 2,..., $N$-1) for which said one or more second quantities, depending on at least one reflectance $\rho$ of the resolution cell $p_{xy}$ in said one or more channels in each one of the second images $A_{i+1}$ of the pairs of successive images, for i = 1, 2,..., $N$-1, are lower than all the mean values $M_{PR\_\rho}$ of the corresponding one or more second quantities of the Permanent Reflectors PRs calculated in step E;

I. determining a third set $S_3$ of resolution cells $p_{xy}$ of the image $A_{i+1}$ equal to the set resulting from the intersection of the first set $S_1$ with the second set $S_2$:

$$S_3 = S_1 \cap S_2 \qquad ;$$

J. determining a set $DB$ of the resolution cells $p_{xy}$ of the image $A_{i+1}$ classified as corresponding to zones which have been subject to a decrease in biomass content or to an increase in soil or mineral cover during the time interval between the acquisitions of the two successive images $A_i$ and $A_{i+1}$, the set $DB$ being equal to the set of the pixels $p_{xy}$ belonging to the first set $S_1$ which do not belong to the third set $S_3$:

$$DB = S_1 - S_3 \qquad ;$$

L. determining, within the third set $S_3$, a fourth set $S_4 \subseteq S_3$ of resolution cells $p_{xy}$ corresponding to areas provided with "burnable" vegetation in the first images $A_i$ of the pairs of successive images, for $i$ = 1, 2,..., $N$-1;

M. determining a set $BA$ of the resolution cells $p_{xy}$ of the image $A_{i+1}$ classified as corresponding to zones which have been subject to a fire during the time interval between the acquisition of the image $A_i$ and the acquisition of the image $A_{i+1}$, the set $BA$ being equal to the fourth set $S_4$:

$$BA = S_4 \quad ;$$

and

N. determining a set $DV$ of the resolution cells $p_{xy}$ of the image $A_{i+1}$ classified as corresponding to zones which have been subject to a loss of vegetation during the time interval between the acquisitions of the two successive images $A_i$ and $A_{i+1}$, the set $DV$ being equal to the set of pixels $p_{xy}$ belonging to the second set $S_2$ which do not belong to the fourth set $S_4$:

$$DV = S_2 - S_4 \qquad .$$

Always according to the invention, said one or more detection frequency channels may be at least two infrared channels, preferably a near infrared or NIR (Near Infra Red) channel, and a short wave infrared or SWIR (Short Wave Infra Red) channel, and/or a medium infrared or MIR (Medium Infra Red) channel.

Still according to the invention, the method may preliminarily process the data acquired by said one or more spectral passive radiometers for obtaining said $N$ images $A_i$, with $N \geq 2$, for $i$ = 1, 2,..., $N$, of the same geographical area having the same plurality of resolution cells or pixels $p_{xy}$ and the same size thereof.

Furthermore according to the invention, in step B Permanent Reflectors PRs may be determined as those resolution cells $p_{xy}$ which, in both images $A_i$ and $A_{i+1}$ of the pair, have values of reflectance $\rho$ in each one of said one or more channels which correspond to densely built urban areas, preferably presenting no or little vegetation with respect to the size of the resolution cells.

Always according to the invention, said one or more first quantities depending on a variation, considered in steps C, D, F, and G, may comprise at least one quantity identically equal to the corresponding variation.

Preferably according to the invention, said one or more first quantities depending on a variation, considered in steps C, D, F, and G, comprise at least one percentage of the corresponding variation.

Still according to the invention, said one or more second quantities depending on at least one reflectance $\rho$, considered in steps C, E, F, and H, may comprise at least one quantity identically equal to the corresponding reflectance $\rho$ of a channel.

Furthermore according to the invention, said one or more second quantities depending on at least one reflectance $\rho$, considered in steps C, E, F, and H, may comprise at least one ratio between two reflectances $\rho$ of two channels.

Always according to the invention, the acquired data may comprise the radiance $L$ of each one of the $N$ images $A_i$ on each one of said one or more detection frequency channels, and the method, before executing step B, may transforms the radiance $L$ into the reflectance $\rho$ for each one of said one or more channels, preferably taking account of the exo-atmospheric solar irradiance $E_0$ and of the effects of the sun zenith angle $\theta_z$, and comprising the estimation of the path radiance $L_p$, more preferably through the DOS method.

Preferably according to the invention, for determining the first set $S_1$ in step G and/or the second set $S_2$ in step H, the method takes vegetation seasonal differences into account.

Still according to the invention, the method may take vegetation seasonal differences into account through the use of one or more corrective factors, preferably depending on the solar elevation angles $\theta_{SEL\_i}$ and $\theta_{SEL\_(i+1)}$ and/or on their difference $(\theta_{SEL\_i} - \theta_{SEL\_(i+1)})$ at the acquisition instants of the two images $A_i$ and $A_{i+1}$.

Preferably according to the invention, the method executes steps L, M, and N only if the following checking step gives a positive outcome:

K. checking that the two images $A_i$ and $A_{i+1}$ of the pair have been acquired in periods of the year in which vegetation is in a comparable blooming condition,
while in the case step K gives a negative outcome the following step is executed:

P. determining a set $DV$ of the resolution cells $p_{xy}$ of the image $A_{i+1}$ classified as corresponding to zones which have been subject to a loss of vegetation during the time interval between the acquisitions of the two successive images $A_i$ and $A_{i+1}$, the set $DV$ being equal to the second set $S_2$:

$$DV = S_2 \quad .$$

Furthermore according to the invention, step K may check whether the solar elevation angles $\theta_{SEL\_i}$ and $\theta_{SEL\_(i+1)}$ at the acquisition instants of the two images $A_i$ and $A_{i+1}$ are both higher or both lower than a threshold value $\Theta$, preferably equal to 35° ($\Theta = 35°$).

It is further subject matter of this invention an Electronic apparatus for processing data acquired along a certain time period on the same geographical area by means of one or more spectral passive radiometers on one or more detection frequency channels, for supplying a mapping, in particular for burnt areas without vegetation, of $N$ images $A_i$, with $N \geq 2$, for $i = 1, 2,..., N$, each image $A_i$ comprising a same plurality of resolution cells or pixels $p_{xy}$, the apparatus comprising:

a data processing unit;
at least one memory unit connected to said data processing unit; and
at least one input/output, or I/O, interface connected to said data processing unit,
the electronic apparatus being characterised in that it executes the previously illustrated automatic method of detecting and mapping, particularly for burnt areas without vegetation.

The present invention will be now described, by way of illustration and not by way of limitation, according to its preferred embodiments, by particularly referring to the Figures of the enclosed drawings, in which:

Figure 1 schematically shows a flow diagram of a preferred embodiment of the method according to the invention;
Figure 2 shows the spectral reflectance signature $\rho_{xy}$ of 12 zones belonging to different land cover vegetation classes for two acquisition dates and the spectral response of the same zone after fire;
Figure 3 shows the spectral reflectance signature of some land cover classes of vegetation and the response of dense urban areas;
Figure 4 shows the spectral reflectance signatures of the areas corresponding to Figure 3 after having been damaged by fire and the spectral response of dense urban PR areas;
Figure 5 shows a first image of Mount Etna acquired by means of the multi spectral radiometer SPOT-4;
Figure 6 shows a second image of Mount Etna acquired by means of the multi spectral radiometer Landsat-7 ETM+;
Figure 7 shows a third image of Mount Etna obtained by means of the method of Figure 1 applied to the two images of Figures 5 and 6;
Figure 8 shows a fourth image of Mount Etna obtained by means of the method of Figure 1 applied to the two images of Figures 5 and 6;
Figure 9 shows a fifth image of Mount Etna obtained by means of the method of Figure 1 applied to the two images of Figures 5 and 6; and
Figure 10 shows a sixth image of Mount Etna obtained by means of the method of Figure 1 applied to the two images of Figures 5 and 6.

The method according to the invention performs a multi spectral measuring of burned and de-vegetated zones on the basis of $N$ images $A_i$, with $N \geq 2$, and for $i$ = 1, 2,..., $N$, acquired over a certain time span by means of spectral passive radiometers. Such radiometers used I the method according to the invention have at least two Infra-red channels, among which a NIR channel and a SWIR or MIR channel.

process for multi spectral measuring of burned and de-vegetated zones which, with N $\geq$ 2 images acquired over an assigned time span, with multi spectral passive radiometers presenting at least two Infrared channels - one NIR and one SWIR or MIR - identifies for every resolution cell, the fire damaged ones in relationship to a pseudo invariant features or Permanent Reflectors PRs, characterized in that said fire damaged cells are identified through the following steps

In particular, for each pair of successive images $A_i$ and $A_{i+1}$, for $i$ = 1, 2,..., $N$-1, the method discriminates:

the set $BA$ of resolution cells or pixels $p_{xy}$ of the image $A_{i+1}$, identified by coordinates ($xy$), corresponding to zones which have been subject to fire during the time interval between the acquisition of image $A_i$ and the acquisition of image $A_{i+1}$;

the set $DB$ of resolution cells $p_{xy}$ of the image $A_{i+1}$ corresponding to zones which have been subject to a decrease in biomass content or to an increase in soil or mineral cover during the time interval between the acquisitions of the two successive images $A_i$ and $A_{i+1}$; and

the set $DV$ of resolution cells $p_{xy}$ of the image $A_{i+1}$ corresponding to zones which have been subject to a loss of vegetation during the time interval between the acquisitions of the two successive images $A_i$ and $A_{i+1}$.

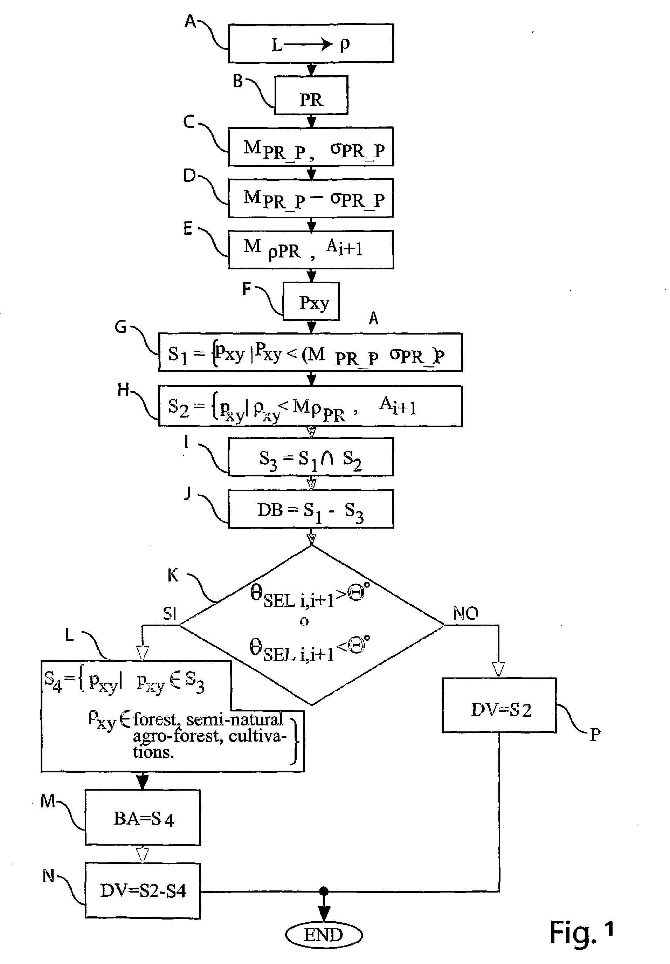

The method identifies the three sets $BA$, $DB$, and $DV$ in relation to pseudo invariant features or Permanent Reflectors, also indicated hereinafter as "PRs", by performing the steps illustrated in the following with reference to Figure 1.

In the first step A, for each cell $p_{xy}$ of each one of the $N$ images $A_i$, radiance $L_{NIR}$ of the NIR channel and radiance $L_{SWIR}$ of the SWIR channel (and/or radiance $L_{MIR}$ of the MIR channel) are transformed, respectively, into reflectance $p_{NIR}$ and into reflectance $\rho SWIR$ (and/or in reflectance $\rho_{MIR}$), respectively, preferably taking account of the exo-atmospheric solar irradiance $E_0$ and of the effects of the sun zenith angle $\theta_z$, and estimating the path radiance $L_p$, more preferably through the DOS method, still more preferably by employing equation [1].

In the second step B, the resolution cells $p_{xy}$ of the N images $A_i$, the values of reflectance $\rho$ of which identify them as cells corresponding to densely built urban areas, presenting no or little vegetation, are assumed as PRs.

In the third step C, for each pair of successive images $A_i$ and $A_{i+1}$, for $i$ = 1, 2,..., $N$-1, some statistical parameters of percentage $P$ of variation, from $i$-th image $A_i$ to the time successive ($i$+1)-th image $A_{i+1}$, of reflectances $\rho$ of the response of the Permanent Reflectors PRs are calculated. In particular, the following are calculated:

the mean $M_{PR\_P\_NIR\_i}$ of percentage $P$ of variation of the reflectance $\rho_{NIR}$ in NIR channel of the response of the Permanent Reflectors PRs, for all the pairs of successive images $A_i$ and $A_{i+1}$, for $i$ = 1,2,..., $N$-1 ;

the standard deviation $\sigma_{PR\_P\_NIR\_i}$ of percentage $P$ of variation of the reflectance $\rho_{NIR}$ in NIR channel of the response of the Permanent Reflectors PRs, for all the pairs of successive images $A_i$ and $A_{i+1}$, for $i$ = 1, 2,..., $N$-1 ;

the mean $M_{PR\_P\_NIR/SWIR\_i}$ (and/or the mean $M_{PR\_P\_NIR/MIR\_i}$) of percentage $P$ of variation of the ratio $\rho_{NIR} / \rho_{SWIR}$ (and/or of the ratio $\rho_{NIR} / \rho_{MIR}$) of the reflectances $\rho_{NIR}$ and $\rho_{SWIR}$ (and/or $\rho_{MIR}$) in NIR/SWIR channel ratio (and/or in NIR/MIR channel ratio), for all the pairs of successive images $A_i$ and $A_{i+1}$, for $i$ = 1, 2,..., $N$-1 ; and

the standard deviation $\sigma_{PR\_P\_NIR/SWIR\_i}$ (and/or the standard deviation $\sigma_{PR\_P\_NIR/SWIR\_i}$) of percentage $P$ of variation of the ratio $\rho_{NIR} / \rho_{SWIR}$ (and/or of the ratio $\rho_{NIR} / \rho_{MIR}$) of the reflectances $\rho_{NIR}$ and $\rho_{WEIR}$ (and/or $\rho_{MIR}$) in NIR/SWIR channel ratio (and/or in NIR/MIR channel ratio), for all the pairs of successive images $A_i$ and $A_{i+1}$, for $i$ = 1, 2,..., $N$-1.

In the fourth step D, it is calculated the difference

$$(M_{PR\_Pi} - \sigma_{Pi})$$

between the values of the means $M_{PR\_Pi}$ and the corresponding standard deviation $\sigma_{Pi}$ for the NIR channel and the NIR/SWIR channel ratio (and/or the NIR/MIR channel ratio), calculated in step C for each pair of successive images $A_i$ and $A_{i+1}$, for $i$ = 1, 2,..., $N$-1. Such difference gives an estimation of the maximum difference of the cumulative contribution in atmospheric transmittance $T_v$ from the target towards the sensor, in atmospheric transmittance $T_z$ in the illumination direction, in optical thickness $t_R$ for Rayleigh scattering, and atmospheric aerosol effects $E_A$.

In the fifth step E, the mean values $M_{PR\_\rho}$ of reflectances ρ of the response of the Permanent Reflectors PRs in each one of the second images $A_{i+1}$ of the pairs of successive images ($A_i$ and $A_{i+1}$), for $i$ = 1, 2,..., $N$-1 are calculated. In particular, the following are calculated:

the mean $M_{PR\_\rho NIR\_(i+1)}$ of the reflectance $\rho_{NIR}$ in NIR channel of the response of the Permanent Reflectors PRs in all the images $A_{i+1}$, for $i$ = 1, 2,..., $N$-1; and

the mean $M_{PR\_\rho NIR\_\rho SWIR\_(i+1)}$ (and/or $M_{PR\_\rho NIR\_\rho MIR\_(i+1)}$) of the ratio $\rho_{NIR}$ / $\rho_{SWIR}$ (and/or of the ratio $\rho_{NIR}$ / $\rho_{MIR})$ of the reflectances $\rho_{NIR}$ and $\rho_{SWIR}$ (and/or $\rho_{MIR}$) in NIR/SWIR channel ratio (and/or in NIR/MIR channel ratio) of the response of the Permanent Reflectors PRs in all the images $A_{i+1}$, for $i$=1,2,...,$N$-1.

In the sixth step F, for each resolution cell $p_{xy}$, it is calculated the percentage $P_{xy}$ of variation, from the $i$-th image $A_i$ to the time successive ($i$+1)-th image $A_{i+1}$, of reflectances ρ, specifically: the percentage $P_{xy\_NIR\_i}$ of variation of the reflectance $\rho_{NIR}$ of pixel $p_{xy}$ in NIR channel, and the percentage $P_{xy\_NIR/SWIR\_i}$ (and/or $P_{xy\_NIR/MIR\_i}$) of variation of the ratio $\rho_{NIR}$ / $\rho_{SWIR}$ (and/or of the ratio $\rho_{NIR}$ / $\rho_{MIR}$) of the reflectances $\rho_{NIR}$ and $\rho_{SWIR}$ (and/or $\rho_{MIR}$) of pixel $p_{xy}$ in the NIR/SWIR channel ratio (and/or in the NIR/MIR channel ratio).

In the seventh step G, it is determined a first set $S_1$ of resolution cells $p_{xy}$ of the image $A_{i+1}$ corresponding to zones which have been subject to a decrease in biomass content or an increase in soil or mineral cover during the time interval between the acquisitions of the two successive images $A_i$ and $A_{i+1}$.

In particular, the first set $S_1$ comprises the resolution cells $p_{xy}$ of the image $A_{i+1}$ for which the percentages calculated in the sixth step F are lower than the difference ($M_{PR\_Pi}$- $\sigma_{Pi}$) calculated in the preceding step D in the corresponding channels of the response of the Permanent Reflectors PRs, calculated in the third step C. That is, the first set $S_1$ comprises the pixels $p_{xy}$ for which the following inequalities are satisfied:

$$P_{xy\_NIR\_i} < (M_{PR\_P\_NIR\_i} - \sigma_{PR\_P\_NIR\_i}) \qquad ,$$

and

$$P_{xy\_NIR/SWIR\_i} < (M_{PR\_P\_NIR/SWIR\_i} - \sigma_{PR\_P\_NIR/SWIR\_i})$$

$$(and/or\ P_{xy\_NIR/MIR\_i} < M_{PR\_P\_NIR/MIR\_i} - \sigma_{PR\_P\_NIR/SWIR\_i}).$$

In the eighth step H, it is determined a second set $S_2$ of resolution cells $p_{xy}$ of the image $A_{i+1}$ corresponding to zones which have been subject to a loss of vegetation during the time interval between the acquisitions of the two successive images $A_i$ and $A_{i+1}$.

In particular, the second set $S_2$ comprises the resolution cells $p_{xy}$ of the image $A_{i+1}$ (for $i$ = 1, 2,..., $N$-1) for which the reflectances $\rho_{xy}$ in the various channels are lower than the mean value $M_{PR\_\rho}$ of reflectances p of the response of the Permanent Reflectors PRs in the corresponding channels of the corresponding images $A_{i+1}$, calculated in the fifth step E. That is, the second set $S_2$ comprises the pixels $p_{xy}$ for which the following inequalities are satisfied:

$$\rho_{xy\_NIR\_(i+1)} < M_{PR\_\rho NIR\_(i+1)} \qquad ,$$

$$\rho_{xy\_NIR\_SWIR\_(i+1)} < M_{PR\_\rho NIR\_\rho SWIR\_(i+1)}$$

$$(and/or\ \rho_{xy\_NIR\_MIR\_(i+1)} < M_{PR\_\rho NIR\_\rho MIR\_(i+1)} ).$$

In the subsequent ninth step I, it is determined a third set $S_3$ of resolution cells $p_{xy}$ of the image $A_{i+1}$ corresponding to zones which have been subject to a damage during the time interval between the acquisitions of the two successive images $A_i$ and $A_{i+1}$.

In particular, the third set $S_3$ is equal to the set resulting from the intersection of the first set $S_1$ with the second set $S_2$:

$$S_3 = S_1 \cap S_2$$

In the tenth step J, it is determined the set *DB* of the resolution cells $p_{xy}$ of the image $A_{i+1}$ corresponding to zones which have been subject to a decrease in biomass content or to an increase in soil or mineral cover during the time interval between the acquisitions of the two successive images $A_i$ and $A_{i+1}$. In particular, the set *DB* is equal to the set of the pixels $p_{xy}$ belonging to the first set $S_1$ which do not belong to the third set $S_3$, (i.e. which do not belong to the second set $S_2$):

$$DB = S_1 - S_3$$

In the eleventh step K, a check is carried out for ascertaining whether the solar elevation angles $\theta_{SEL\_i}$ and $\theta_{SEL\_(i+1)}$ at the acquisition instants of the two images $A_i$ and $A_{i+1}$ are both higher or both lower than a threshold value $\Theta$.
Such check assures that the two images $A_i$ and $A_{i+1}$ have been acquired in periods of the year in which vegetation is in a comparable blooming condition, in order to grant reliability of mapping. By way of example, in Italy it may be deemed that the two images $A_i$ and $A_{i+1}$ have been both acquired in spring or summer if $\theta_{SEL\_i}$ and $\theta_{SEL\_(i+1)}$ are both higher than $\Theta = 35°$, or they have been both acquired in autumn or winter if $\theta_{SEL\_i}$ and $\theta_{SEL\_(i+1)}$ are both lower than $\Theta = 35°$. Such check may be easily carried out by checking the following inequality:

$$(\theta_{SEL\_i} - \Theta)*(\theta_{SEL\_(i+1)} - \Theta) > 0$$

Alternatively, in order to consider the vegetation seasonal differences, the method may comprise the use of corrective factors in calculations for determining the first set $S_1$ and/or the second set $S_2$, corrective factors preferably depending on the solar elevation angles $\theta_{SEL\_i}$ and $\theta_{SEL\_(i+1)}$, and possibly on their difference $(\theta_{SEL\_i} - \theta_{SEL\_(i+1)})$, at the acquisition instants of the two images $A_i$ and $A_{i+1}$.
In the case when the check of step K gives a positive outcome, the three steps L, M and N are performed; otherwise, if the check of step K gives a negative outcome, step P is performed.
In step L it is determined, within the third set $S_3$, a fourth set $S_4 \subseteq S_3$ of resolution cells $p_{xy}$ corresponding to zones wherein values of reflectance $\rho_{xy}$ of the preceding image $A_i$ identify them as cells corresponding to areas provided with "burnable" vegetation, such as forestry, agro-forestry, and semi-natural areas, and zones of permanent crops (preferably no zone is subject to human changes).
In step M, it is determined the set *BA* of the resolution cells $p_{xy}$ of the image $A_{i+1}$ corresponding to zones which have been subject to a fire during the time interval between the acquisition of the image $A_i$ and the acquisition of the image $A_{i+1}$. In particular, the set *BA* is equal to the fourth set $S_4$

$$BA = S_4$$

In step N, it is determined the set *DV* of the resolution cells $p_{xy}$ of the image $A_{i+1}$ corresponding to zones which have been subject to a loss of vegetation during the time interval between the acquisitions of the two successive images $A_i$ and $A_{i+1}$. In particular, the set *DV* is equal to the set of pixels $p_{xy}$ belonging to the second set $S_2$ which do not belong to the fourth set $S_4$:

$$DV = S_2 - S_4$$

In the case when the check of step K gives a negative outcome, it is not possible to determine with sufficient reliability the set *BA*, and step P is performed, with which it is determined only the set *DV* of the resolution cells $p_{xy}$ of the image $A_{i+1}$ corresponding to zones which have been subject to a loss of vegetation during the time interval between the acquisitions of the two successive images $A_i$ and $A_{i+1}$. In particular, the set *DV* is equal to the second set $S_2$:

$$DV = S_2$$

Preferably, the method comprises a further final step wherein the pixels $p_{xy}$ belonging to the set *BA* which are singly isolated from the other pixels of the set *BA* (or which belong to groups of pixels $p_{xy}$ of the set *BA* creating a zone having a reduced surface extension) are re-assigned to the set to which the surrounding pixels belong. This is done in order to reduce wrong assignments due to occurrence of limit values of reflectance or of the related statistical parameters used in calculations performed by the method and which may introduce evaluation ambiguities. Similarly, in the case when pixels not assigned to the set *BA* are present within wide areas of pixels of the set *BA,* this final step of the method may re-assign these pixels to the set *BA.* Similar processings may be carried out for the sets *DB* and *DV.*

It is evident that the method according to the invention enables estimating biomass content and vegetation cover from one date to another and ascertaining presence of areas which have been subject to loss of vegetation or fires during the same period.

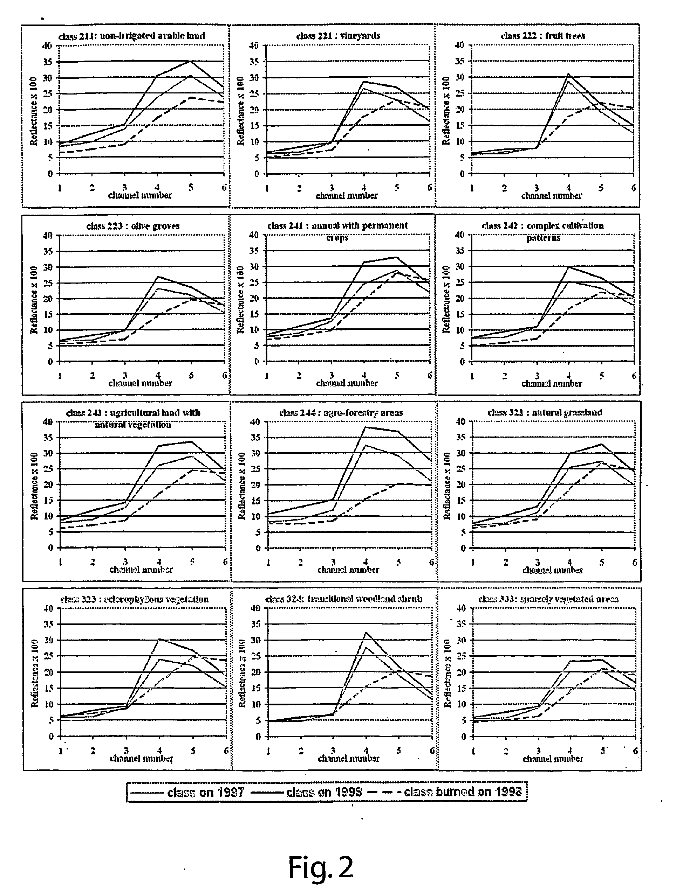

Characteristics and advantages of the method according to the invention are illustrated in the following with reference to Figures 2-10, which show some applications thereof.

Figure 2 shows the so-called spectral reflectance signature $\rho_{xy}$ of 12 zones pertaining to different vegetation classes for two acquisition dates and the spectral response of the same zone after having burned. Data have been collected through satellite platform Landsat-5 TM. In Figure 2, Landsat 5 TM channels number 1-5, and 7 are indicated as 1-6 in X coordinate, while the corresponding reflectance percentage is reported in Y coordinate. The wavelength interval of channels 1-5, and 7 are respectively 0.45-0.52 (Visible, or VIS, Blue), 0.53-0.61 (VIS-Green), 0.63-0.69 (VIS-Red), 0.78-0.90 (NIR), 1.55-1.75 (SWIR) and 2.09-2.35 (SWIR)

The burned areas are obtained by a visual comparison of the September 12, 1997, and the August 30, 1998, Landsat 5 TM images, made by an operator, by using various RGB combination in order to visually enhance the vegetation alteration. Such areas, which are sites of fire events reported in National Forest Guards and/or National Fire Brigades databases, are selected as unequivocally identified shapes of fire-damaged surfaces. Vegetation classes are indicated as land use Corine classes (according to the nomenclature of the known CORINE European project of coordinated information on the land use in the European context: COoRdinated INformation on the european Environment). In particular, the vegetation classes presenting a minimum of three distinct burned areas with a surface greater than 3 hectares are considered as fire-damaged areas. Resolution cells $p_{xy}$ situated in the inner central part of areas identified as fire-damaged have been selected and their associated reflectance percentages in channels 1-5, and 7 have been adopted as characteristic spectral signature of burnt area for the relevant vegetation class.

For each land cover Corine class, spectral signatures of vegetated resolution cells on the two Landsat 5 images acquired on two different dates are different. This means that a quantitative evaluation of the damages occurred from one date to another by using multi-temporal analysis of remote sensing data can be performed only if the vegetation variation is calculated in relationship to a reference. Intrinsic reflectance spectral signature of this reference target homogeneoc!sly distributed over the whole remote sensing image must be independent from the acquisition date of the remote sensing data. Such reference targets are just the Permanents Reflectors PRs. The analysis of the vegetation variation from one date to another must be calculated by considering the distance from the vegetation spectral variation to the PRs spectral variation. Thus, for each pixel the detection change from one date to another is decomposed in two components: one as representative of the variations due to difference of sensor sensitivity and radiometric range, to difference of wavelength centre value, to difference of up-welling and down-welling transmittance along the ground sensor path between the two image acquisition dates, and the second component as representative of the effective variation of the vegetation state between the two remote sensed image acquisition dates.

The reflectance variation from vegetation to burned area is strictly related to the vegetation type and biomass content originally present, whereas the spectral signature of fire-damaged areas, on the post-fire image, appears slightly depending on the initial vegetation cover.

In the NIR window, reflectance is directly proportional to the amount of biomass. Since green vegetation is very reflective in the NIR channel, the fire process typically gives rise to a reflectance decrease.

The NIR reflectance decrease associated to fire damage is particularly significant for vegetal land classes characterised by the presence of trees and/or shrubs, such as: vineyards, fruit trees and olive groves (respectively identified as classes 221, 222, and 223 in the CORINE classification) or agro-forestry areas, transitional woodland and shrubs (respectively identified as classes 244, 323 and 324). The poorly defined class 242, including all complex cultivation patterns, is also characterised by a notable NIR reflectance decrease.

For all vegetation classes that underwent this analysis, NIR reflectance sharply decreases with respect to SWIR reflectance after fire damage

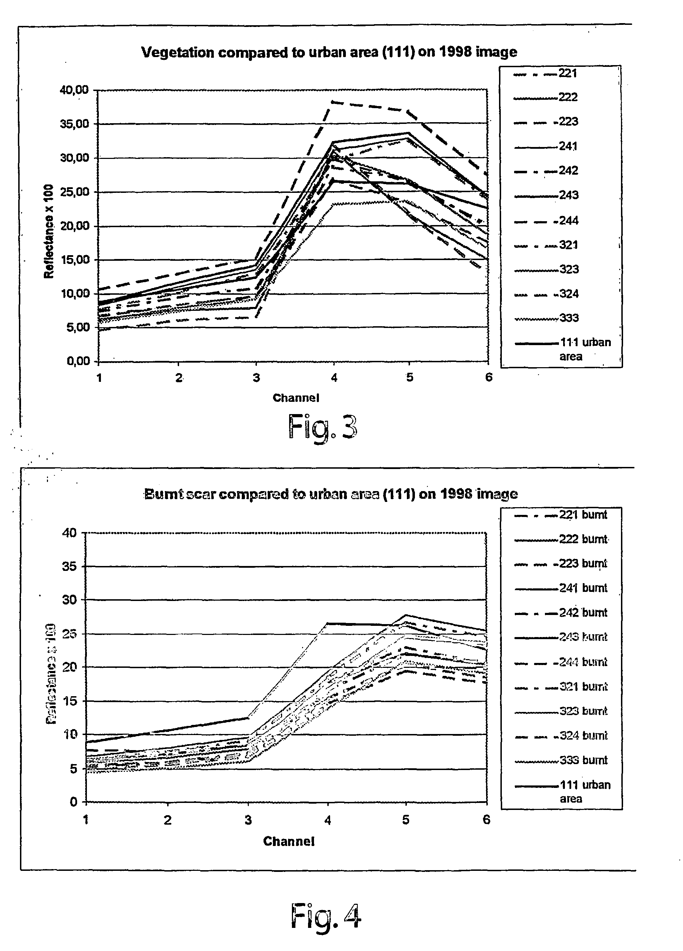

Figure 3 shows the spectral reflectance signature in some Corine vegetation classes and the response from densely urbanised areas, always obtained in channels 1-5, and 7 of the satellite platform Landsat 5 TM radiometer. Said urban areas homogeneously distributed over the whole sensed image are considered as PRs. As in Figure 2, also in Figure 3 channels 1-5 and 7 of Landsat-5 TM are numbered as 1 to 6 in X coordinate.

It can be noted in Figure 3 that, except for the case of Corine class 333, corresponding to sparsely vegetated areas, and of Corine class 223, corresponding to olive groves, NIR reflectance percentage of PRs and reflectance percentage ratio in NIR/SWIR channels of PRs are lower than the corresponding values of the vegetation classes taken under consideration.

Figure 4. shows some spectral reflectance signatures of the fire-damaged areas corresponding to the preceding Corine classes, considered in Figure 3, and the spectral response of densely urbanised areas PR areas, still obtained in channels 1-5, 7 (indicated with numbers 1 to 6 in X coordinate) through the satellite platform Landsat 5 TM.

Figure 4 shows that fire-damaged areas have the same general form of spectra independently from the original vegetation cover class. Moreover, both NIR reflectance percentage of PRs and reflectance percentage ratio in NIR/ SWIR channels of PRs are higher than the corresponding values of all fire-damaged areas, independently from the original vegetation cover class.

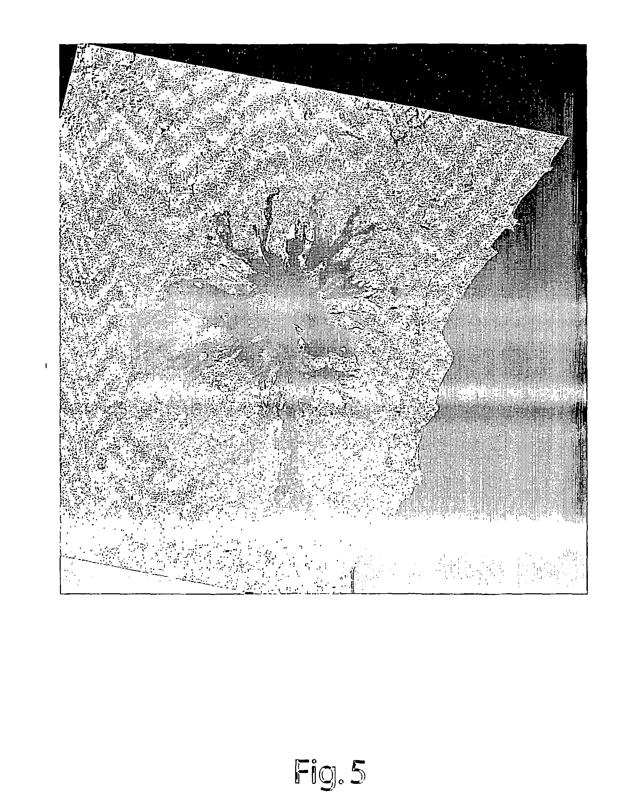

Figure 5 represents a false colour image of Mount Etna acquired by means of the satellite platform SPOT-4 in channels NIRSWIR-RED on 7th June 2001. SPOT-4 borne multi spectral radiometer is characterised by four channels in the following wavelength intervals: 0.50-0.59 (VIS-Green), 0.61-0.68 (VIS-Red), 0.78-0.89 (NIR) and 1.58-1.75 (SWIR). Pixels size of SPOT images is equal to 20 meters* 20 meters.

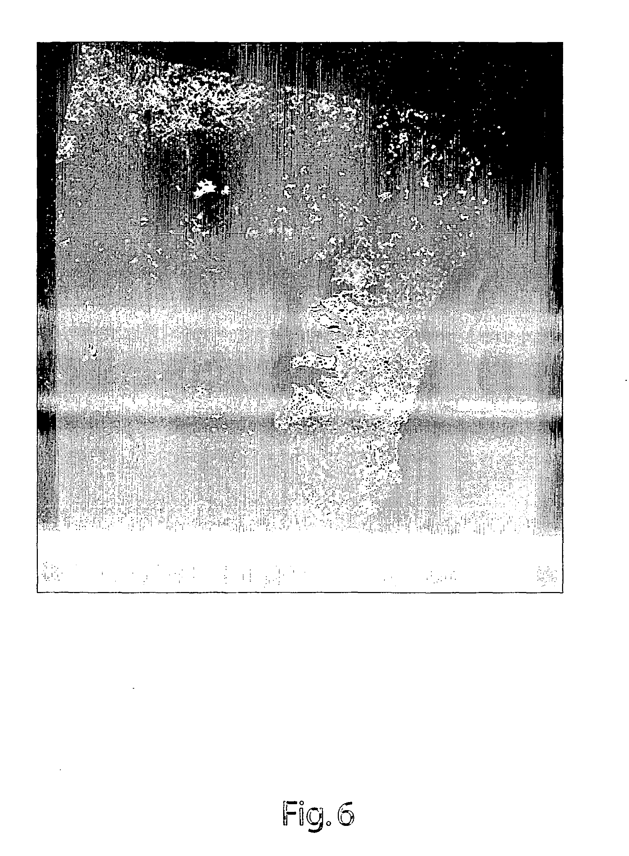

Figure 6 represents a false colour composite image of Mount Etna acquired by means of the satellite platform Landsat-7 in channels SWIR-NIR-RED on 29th July 2001. Landsat-7 borne radiometer pixels, originally having size equal to 30 meters*30 meters, have been resized to pixels of size equal to 20 meters*20 meters with re-sampling method that does not alter the original land radiative spectrum.

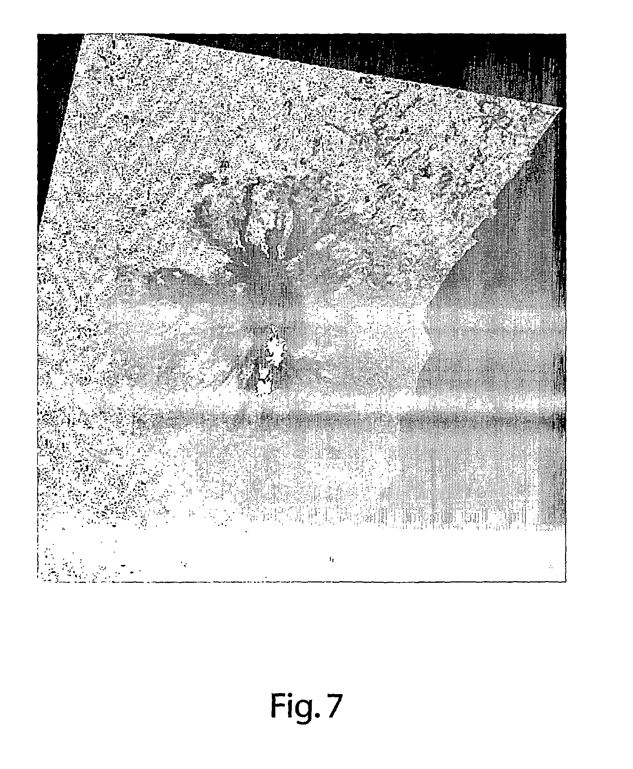

The subsequent Figures 7-10 show the results of an application of the method according to the invention in critical conditions with respect to better processing procedures for the method, according to the following reasons.

First of all, the two remote sensed images are acquired by two different multi-spectral radiometers, i.e. SPOT-4 (radiometer HRVIR-1) and Landsat-7 (radiometer ETM+), which are furthermore differen in radiometric response distribution, different in channel central wavelength, different in radiometric range, and different in pixel size.

Moreover, the two remote sensed images are acquired in different seasons since the pre-fire image has been acquired in late spring at the beginning of June, when the vegetation is characterised by a high level of biomass content and ground coverage, whereas the post-fire image has been acquired in summer at the end of July, when the vegetation is characterized by high hydric stress. Due to seasonal changes, all vegetation Corine classes are characterised by a substantial decrease in both the biomass content and the vegetation cover.

Finally, on the year 2001 Etna volcano was the site of eruptive activity during summer and particularly at the end of July. 2001 eruptive activity of Etna was characterised by high level of ash fall, that is a strong catalyst for vegetation cover alteration, since it contributes to the increase of mineral cover on the ground and to the local drop of chlorophyll transformation of biomass.

Figure 7 represents the image comprising resolution cells, of size equal to 20 meters*20 meters, classified through variation analysis as damaged vegetation cells, which are characterised by a decrease in percentage of biomass content (decrease in percentage of NIR reflectance value) and in vegetation cover (decrease in percentage of NIR/SWIR ratio) higher than the PRs spectral variation calculated between the two remote sensed images of 7th June 2001, acquired by SPOT-4, and 29th July 2001, acquired by Landsat 7 ETM+. In the case under consideration, PRs are dense urban areas, the spectral variation of which is assumed as representative of differences in sensor sensitivity and radiometric range, in wavelength centre value, or in response histogram in the wavelength interval of NIR and SWIR channels, in up-welling and down-welling transmittance along the ground sensor path between the two remote sensing images of 7th June 2001, acquired by SPOT-4, and 29th July 2001, acquired by Landsat 7 ETM+.

The North-West part of the image is mainly occupied by evergreen forests and it can be noted that for pixels classified as damaged resolution cells from 7th June to 29th July, the decrease in biomass content and vegetation cover is principally due to seasonal changes occurring between spring and summer vegetation states.

Differently, for pixels classified as damaged resolution cells from 7th June to 29th July in the Central East part of the image, the decrease in biomass content and vegetation cover is principally due to ash fall occurred during the eruption period of Etna in 2001.

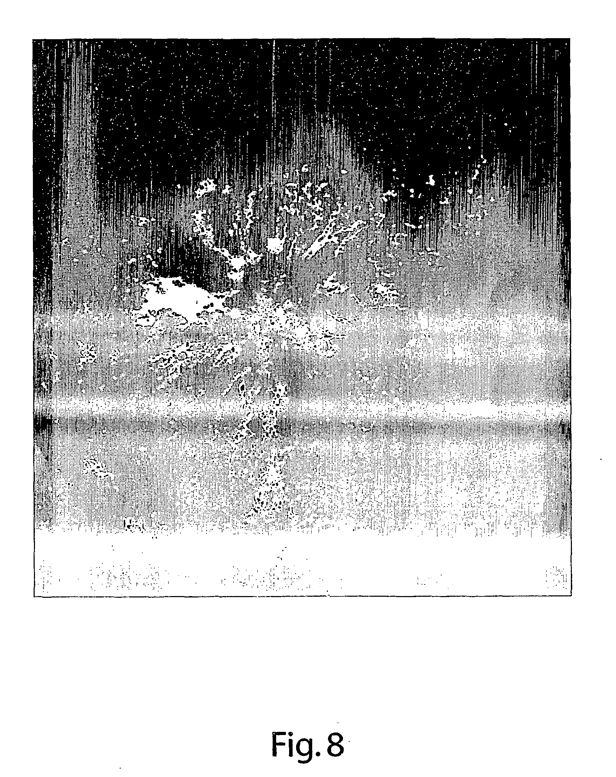

Figure 8 shows all the de-vegetated resolution cells present in the Landsat 7 ETM+ image acquired on 29th July 2001. Said resolution cells are characterised by biomass content (given by the NIR reflectance value) and vegetation cover (given by NIR/SWIR ratio) lower than the one of PRs (dense urban areas) on final remote sensing data Landsat 7 ETM+ of 29th July. On this image, cold lava flows, eroded soils, rock areas and few urban sites are classified as de-vegetated resolution cells.

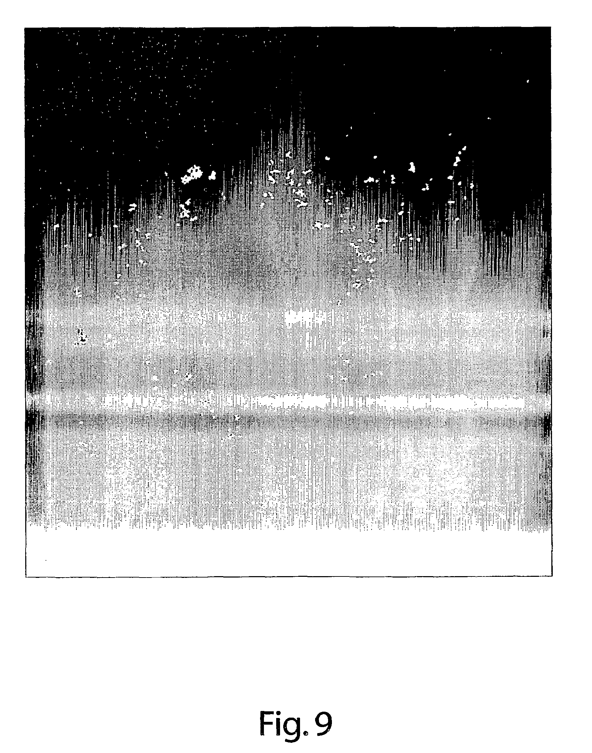

Figure 9 shows all the resolution cells wherein a decrease in biomass content and vegetation cover occurs from 7th June 2001 to 29th July 2001 and which are classified as de-vegetated resolution cells on 29th July 2001. In particular, in Figure 9 the pixel clusters constituted by more than 10 pixels selected by both multi-temporal variation (Figure 7) and post fire analysis (Figure 8) are classified as fire damaged areas.

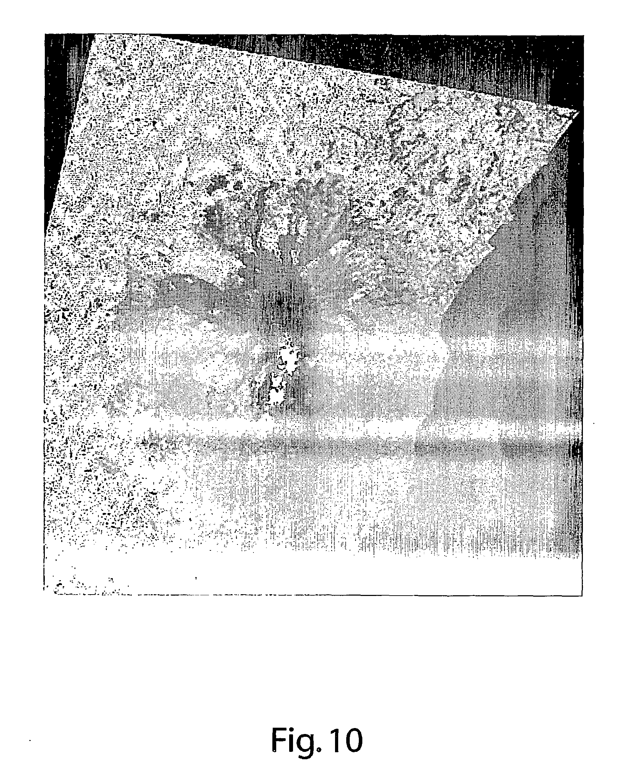

Figure 10 represents the false colour composite image of 29th July 2001 acquired by Landsat-7 ETM + in channels SWIR-NIR-Blue overlaying the layer GIS of fire damaged surfaces larger than 1 hectare, defined in Figure 9.

The preferred embodiments have been above described and some modifications of this invention have been suggested, but it should be understood that those skilled in the art can make variations and changes, without so departing from the related scope of protection, as defined by the following claims.

**Claims**

1. Automatic method of detecting and mapping, particularly for burnt areas without vegetation, in $N$ images $A_i$, with $N \geq 2$, for $i$ = 1, 2,..., $N$, obtained from data acquired along a certain time period on the same geographical area by means of one or more spectral passive radiometers on one or more detection frequency channels, each image $A_i$ comprising a same plurality of resolution cells or pixels $p_{xy}$, the reflectance p of each one of said one or more channels being available for each image, **characterised in that** it comprises the following steps:

B. for each pair of successive images $A_i$ and $A_{i+1}$, for $i$ = 1, 2,..., $N$-1, assuming as Permanent Reflectors PRs the resolution cells $p_{xy}$ which have optical and electromagnetic properties constant in both images;

C. for each pair of successive images $A_i$ and $A_{i+1}$, for $i$ = 1, 2,..., $N$-1, calculating the mean $M_{PR\_P\_i}$ and the standard deviation $\sigma_{PR\_P\_i}$ of one or more first quantities ($P$) depending on the variation, from the $i$-th image $A_i$ to the time successive ($i$+1)th image $A_{i+1}$, of one or more second quantities ($\rho_{NIR}$, $\rho_{NIR}$ / $\rho_{SWIR}$, $\rho_{NIR}$ / $\rho_{MIR}$) depending on at least one reflectance $\rho$ of the Permanent Reflectors PRs in said one or more channels;

D. calculating the difference ($M_{PR\_Pi}$ - $\sigma_{Pi}$) between the mean $M_{PR\_P\_i}$ and the standard deviation $\sigma_{PR\_P\_i}$, calculated in step C, for each one of said one or more first quantities ($P$);

E. calculating the mean values $M_{PR\_\rho}$ of said one or more second quantities ($\rho_{NIR}$, $\rho_{NIR}$ /$\rho_{SWIR}$, $\rho_{NIR}$ / $\rho_{MIR}$), depending on at least one reflectance $\rho$ of the Permanent Reflectors PRs in said one or more channels, in each one of the second images $A_{i+1}$ of the pairs of successive images ($A_i$ and $A_{i+1}$), for $i$ = 1, 2,...,$N$-1 ;

F. for each resolution cell $p_{xy}$, calculating said one or more first quantities ($P_{xy}$), already considered in step C for the Permanent Reflectors PRs, depending on the variation, from the $i$-th image $A_i$ to the time successive ($i$+1)-th image $A_{i+1}$, of said one or more second quantities ($\rho NIR$ , $\rho NIR$ / $\rho SWIR$, $\rho NIR$ / $\rho MIR$) depending on at least one reflectance $p$ of the pixels $p_{xy}$ in said one or more channels;

G. determining a first set $S_1$ of resolution cells $p_{xy}$ of the image $A_{i+1}$, comprising the resolution cells $p_{xy}$ of the image $A_{i+1}$ for which said one or more first quantities ($P_{xy}$) calculated in step F are lower, in each one of said one or more channels, than the difference ($M_{PR\_Pi}$ - $\sigma_{Pi}$) calculated in step D for each corresponding quantity ($P$) of said one or more first quantities ($P$) related to the Permanent Reflectors PRs;

H. determining a second set $S_2$ of resolution cells $p_{xy}$ of the image $A_{i+1}$ comprising the resolution cells $p_{xy}$ of the image $A_{i+1}$ (for $i$ = 1, 2,..., $N$-1) for which said one or more second quantities ($\rho NIR$, $\rho NIR$ / $\rho SWIR$, $\rho NIR$ /$\rho MIR$), depending on at least one reflectance $\rho$ of the resolution cell $p_{xy}$ in said one or more channels in each one of the second images $A_{i+1}$ of the pairs of successive images, for $i$ = 1, 2,..., $N$-1, are lower than all the mean values $M_{PR\_\rho}$ of the corresponding one or more second quantities ($\rho NIR$, $\rho NIR$ / $\rho SWIR$, $\rho NIR$ /$\rho MIR$) of the Permanent Reflectors PRs calculated in step E;

I. determining a third set $S_3$ of resolution cells $p_{xy}$ of the image $A_{i+1}$ equal to the set resulting from the intersection of the first set $S_1$ with the second set $S_2$:

$$S_3 = S_1 \cap S_2 \qquad ;$$

J. determining a set $DB$ of the resolution cells $p_{xy}$ of the image $A_{i+1}$ classified as corresponding to zones which have been subject to a decrease in biomass content or to an increase in soil or mineral cover during the time interval between the acquisitions of the two successive images $A_i$ and $A_{i+1}$, the set $DB$ being equal to the set of the pixels $p_{xy}$ belonging to the first set $S_1$ which do not belong to the third set $S_3$:

$$DB = S_1 - S_3 \qquad ;$$

L. determining, within the third set $S_3$, a fourth set $S_4 \subseteq S_3$ of resolution cells $p_{xy}$ corresponding to areas provided with "burnable" vegetation in the first images $A_i$ of the pairs of successive images, for $i$ = 1, 2,..., $N$-1;

M. determining a set *BA* of the resolution cells $p_{xy}$ of the image $A_{i+1}$ classified as corresponding to zones which have been subject to a fire during the time interval between the acquisition of the image $A_i$ and the acquisition of the image $A_{i+1}$, the set *BA* being equal to the fourth set $S_4$:

$$BA = S_4 \quad ;$$

and

N. determining a set *DV* of the resolution cells $p_{xy}$ of the image $A_{i+1}$ classified as corresponding to zones which have been subject to a loss of vegetation during the time interval between the acquisitions of the two successive images $A_i$ and $A_{i+1}$, the set *DV* being equal to the set of pixels $p_{xy}$ belonging to the second set $S_2$ which do not belong to the fourth set $S_4$:

$$DV = S_2 - S_4 \quad .$$

2. Method according to claim 1, **characterised in that** said one or more detection frequency channels are at least two infrared channels.

3. Method according to claim 2, **characterised in that** said at least two infrared channels are a near infrared or NIR (Near Infra Red) channel, and a short wave infrared or SWIR (Short Wave Infra Red) channel, and/or a medium infrared or MIR (Medium Infra Red) channel.

4. Method according to any one of the preceding claims, **characterised in that** the method preliminarily processes the data acquired by said one or more spectral passive radiometers for obtaining said N images $A_i$, with $N \geq 2$, for $i = 1, 2,..., N$, of the same geographical area having the same plurality of resolution cells or pixels $p_{xy}$ and the same size thereof.

5. Method according to any one of the preceding claims, **characterised in that** in step B Permanent Reflectors PRs are determined as those resolution cells $P_{xy}$ which, in both images $A_i$ and $A_{i+1}$ of the pair, have values of reflectance $\rho$ in each one of said one or more channels which correspond to densely built urban areas, preferably presenting no or little vegetation with respect to the size of the resolution cells.

6. Method according to any one of the preceding claims, **characterised in that** said one or more first quantities (*P*) depending on a variation, considered in steps C, D, F, and G, comprise at least one quantity identically equal to the corresponding variation.

7. Method according to any one of the preceding claims, **characterised in that** said one or more first quantities (*P*) depending on a variation, considered in steps C, D, F, and G, comprise at least one percentage (*P*) of the corresponding variation.

8. Method according to any one of the preceding claims, **characterised in that** said one or more second quantities ($\rho NIR$, $\rho NIR / \rho SWIR$, $\rho NIR / \rho MIR$) depending on at least one reflectance $\rho$, considered in steps C, E, F, and H, comprise at least one quantity identically equal to the corresponding reflectance $\rho$ ($\rho_{NIR}$) of a channel.

9. Method according to any one of the preceding claims, **characterised in that** said one or more second quantities ($\rho NIR$, $\rho NIR / \rho SWIR$, $\rho NIR / \rho MIR$) depending on at least one reflectance $\rho$, considered in steps C, E, F, and H, comprise at least one ratio between two reflectances $p$ ($\rho NIR / \rho SWIR$, $\rho NIR / \rho MIR$) of two channels.

10. Method according to any one of the preceding claims, **characterised in that** the acquired data comprise the radiance *L* of each one of the *N* images $A_i$ on each one of said one or more detection frequency channels, and **in that** the method, before executing step B, transforms ([1]) the radiance *L* into the reflectance $\rho$ for each one of said one or more channels.

11. Method according to claim 10, **characterised in that** the transformation of the radiance *L* into the reflectance $\rho$ takes account of the exo-atmospheric solar irradiance $E_0$ and of the effects of the sun zenith angle $\theta_z$, and it comprises the estimation of the path radiance $L_p$, preferably through the DOS method.

**12.** Method according to any one of the preceding claims, **characterised in that**, for determining the first set $S_1$ in step G and/or the second set $S_2$ in step H, the method takes vegetation seasonal differences into account.

**13.** Method according to claim 12, **characterised in that** the method takes vegetation seasonal differences into account through the use of one or more corrective factors.

**14.** Method according to claim 13, **characterised in that** said one or more corrective factors depends on the solar elevation angles $\theta_{SEL\_i}$ and $\theta_{SEL\_(i+1)}$ and/or on their difference ($\theta_{SEL\_i} - \theta_{SEL\_(i+1)}$) at the acquisition instants of the two images $A_i$ and $A_{i+1}$.

**15.** Method according to any one of claims 12 to 14, **characterised in that** it executes steps L, M, and N only if the following checking step gives a positive outcome:

K. checking that the two images $A_i$ and $A_{i+1}$ of the pair have been acquired in periods of the year in which vegetation is in a comparable blooming condition,
while in the case step K gives a negative outcome the following step is executed:
P. determining a set $DV$ of the resolution cells $p_{xy}$ of the image $A_{i+1}$ classified as corresponding to zones which have been subject to a loss of vegetation during the time interval between the acquisitions of the two successive images $A_i$ and $A_{i+1}$, the set $DV$ being equal to the second set $S_2$:

$$DV = S_2 \quad .$$

**16.** Method according to claim 15, **characterised in that** step K checks whether the solar elevation angles $\theta_{SEL\_i}$ and $\theta_{SEL\_(i+1)}$ at the acquisition instants of the two images $A_i$ and $A_{i+1}$ are both higher or both lower than a threshold value $\Theta$.

**17.** Method according to claim 16, **characterised in that** said threshold value $\Theta$ is equal to 35° ($\Theta = 35°$).

**18.** Electronic apparatus for processing data acquired along a certain time period on the same geographical area by means of one or more spectral passive radiometers on one or more detection frequency channels, for supplying a mapping, in particular for burnt areas without vegetation, of $N$ images $A_i$, with $N \geq 2$, for $i = 1, 2,..., N$, each image $A_i$ comprising a same plurality of resolution cells or pixels $p_{xy}$, the apparatus comprising:

a data processing unit;
at least one memory unit connected to said data processing unit; and
at least one input/output, or I/O, interface connected to said data processing unit,
the electronic apparatus being **characterised in that** it executes the automatic method of detecting and mapping, particularly for burnt areas without vegetation, according to any one of claims 1 to 17.

**Patentansprüche**

**1.** Automatisches Verfahren zum Erfassen und Abbilden insbesondere von verbrannten Bereichen ohne Vegetation in N Bildern $A_i$ mit $N \geq 2$, für $i = 1, 2, ..., N$, die aus Daten erhalten wurden, die während einer bestimmten Zeitspanne über demselben geographischen Bereich mit Mitteln eines oder mehrerer passiver Spektralradiometer auf einem oder mehreren Erfassungsfrequenzkanälen aufgenommenen wurden, wobei jedes Bild $A_i$ eine gleiche Mehrzahl von Auflösungszellen oder Pixeln $p_{xy}$ umfasst, wobei die Reflexion $\rho$ von jedem einzelnen des einen oder der mehreren Kanäle für jedes Bild verfügbar ist, **dadurch gekennzeichnet, dass** das Verfahren die folgenden Schritte umfasst:

B. für jedes Paar von aufeinanderfolgenden Bildern $A_i$ und $A_{i+1}$, für $i = 1, 2, ..., N-1$: Annahme der Auflösungszellen $p_{xy}$, die in beiden Bildern konstante optische und elektromagnetische Eigenschaften aufweisen, als permanente Reflektoren PRs;
C. für jedes Paar von aufeinanderfolgenden Bildern $A_i$ und $A_{i+1}$, für $i = 1, 2, ..., N-1$: Berechnen des Mittelwertes $M_{PR\_P\_i}$ und der Standardabweichung $\sigma_{PR\_P\_i}$ von einer oder mehreren ersten Größen (P), die von der Variation von dem $i$-ten Bild $A_i$ zu dem zeitlich nachfolgenden $(i+1)$-ten Bild $A_{i+1}$ einer oder mehreren zweiten Größen

($\rho NIR$, $\rho_{NIR}$ / $\rho_{SWIR}$, $\rho_{NIR}$ / $\rho_{MIR}$) abhängig sind, die von zumindest einer Reflexion $\rho$ der permanenten Reflektoren PRs in dem einen oder den mehreren Kanälen abhängig sind;

D. Berechnen der Differenz ($M_{PR\_Pi}$ - $\sigma_{Pi}$) zwischen dem Mittelwert $M_{PR\_P\_i}$ und der Standardabweichung $\sigma_{PR\_P\_i}$, die in dem Schritt C berechnet wurden, für jede einzelne der einen oder mehreren ersten Größen ($P$);

E. Berechnen der Mittelwerte $M_{PR\_\rho}$ der einen oder der mehreren zweiten Größen ($\rho_{NIR}$, $\rho_{NIR}$ / $\rho_{SWIR}$, $\rho_{NIR}$ / $\rho_{MIR}$), die von der zumindest einen Reflexion $\rho$ der permanenten Reflektoren PRs in dem einen oder den mehreren Kanälen abhängig sind, in jedem einzelnen der zweiten Bilder $A_{i+1}$ der Paare von aufeinanderfolgenden Bildern ($A_i$ und $A_{i+1}$), für $i$ = 1, 2, ..., $N$-1;

F. für jede Auflösungszelle $p_{xy}$: Berechnen der einen oder der mehreren ersten Größen ($P_{xy}$), welche bereits im Schritt C für die permanenten Reflektoren PRs berücksichtigt wurden und die von der Variation von dem $i$-ten Bild $A_i$ zu dem zeitlich nachfolgenden ($i+1$)-ten Bild $A_{i+1}$ der einen oder der mehreren zweiten Größen ($\rho_{NIR}$, $\rho_{NIR}$ / $\rho_{SWIR}$, $\rho_{NIR}$ / $\rho_{MIR}$) abhängig sind, die von zumindest einer Reflexion $\rho$ der Pixel $p_{xy}$ in dem einen oder den mehreren Kanälen abhängig sind;

G. Bestimmen eines ersten Satzes $S_1$ von Auflösungszellen $p_{xy}$ des Bildes $A_{i+1}$, der die Auflösungszellen $p_{xy}$ des Bildes $A_{i+1}$ umfasst, für welche die in dem Schritt F berechnete eine oder die in dem Schritt F berechneten mehreren ersten Größen ($P_{xy}$) in jedem einzelnen des einen oder der mehreren Kanäle kleiner ist als die in dem Schritt D berechnete Differenz ($M_{PR\_Pi}$-$\sigma_{pi}$) für jede entsprechende Größe ($P$) der einen oder der mehreren ersten Größen ($P$), die auf die permanenten Reflektoren PRs bezogen sind;

H. Bestimmen eines zweiten Satzes $S_2$ von Auflösungszellen $p_{xy}$ des Bildes $A_{i+1}$, der die Auflösungszellen $p_{xy}$ des Bildes $A_{i+1}$ (für $i$ = 1, 2, ..., $N$-1) umfasst, für welche die eine oder die mehreren zweiten Größen ($\rho_{NIR}$, $\rho_{NIR}$ / $\rho_{SWIR}$, $\rho_{NIR}$ / $\rho_{MIR}$), die von der zumindest einen Reflexion $\rho$ der Auflösungszelle $p_{xy}$ in dem einen oder den mehreren Kanälen in jedem einzelnen der zweiten Bilder $A_{i+1}$ der Paare von aufeinanderfolgenden Bildern für $i$ = 1, 2, ..., $N$-1 abhängig sind, kleiner sind als alle Mittelwerte $M_{PR\_\rho}$ der entsprechenden einen oder mehreren zweiten Größen ($\rho_{NIR}$, $\rho_{NIR}$ / $\rho_{SWIR}$, $\rho_{NIR}$ / $\rho_{MIR}$) der in dem Schritt E berechneten permanenten Reflektoren PRs;

I. Bestimmen eines dritten Satzes $S_3$ von Auflösungszellen $p_{xy}$ des Bildes $A_{i+1}$ gleich dem aus der Schnittmenge des ersten Satzes $S_1$ mit dem zweiten Satz $S_2$ resultierenden Satz:

$$S_3 = S_1 \cap S_2;$$

J. Bestimmen eines Satzes $DB$ der Auflösungszellen $p_{xy}$ des Bildes $A_{i+1}$, die als den Zonen entsprechend klassifiziert sind, welche während der Zeitspanne zwischen den Aufnahmen der zwei aufeinanderfolgenden Bilder $A_i$ und $A_{i+1}$ einer Abnahme des Biomassengehalts oder einer Zunahme der Erd- oder Mineralabdeckung unterlagen, wobei der Satz $DB$ gleich dem Satz der Pixel $p_{xy}$ ist, die zu dem ersten Satz $S_1$ gehören und die nicht zu dem dritten Satz $S_3$ gehören:

$$DB = S_1 - S_3;$$

L. Bestimmen innerhalb des dritten Satzes $S_3$ eines vierten Satzes $S_4 \subseteq S_3$ der Auflösungszellen $p_{xy}$ entsprechend den Bereichen, welche in den ersten Bildern $A_i$ des Paares von aufeinanderfolgenden Bildern für $i$ = 1, 2, ..., $N$-1, "brennbare" Vegetation aufweisen;

M. Bestimmen eines Satzes $BA$ der Auflösungszellen $p_{xy}$ des Bildes $A_{i+1}$, die den Zonen entsprechend klassifiziert sind, welche während der Zeitspanne zwischen der Aufnahme des Bildes $A_i$ und der Aufnahme des Bildes $A_{i+1}$ einem Feuer ausgesetzt waren, wobei der Satz $BA$ gleich dem vierten Satz $S_4$ ist:

$$BA = S_4;$$

und

N. Bestimmen eines Satzes $DV$ von Auflösungszellen $p_{xy}$ des Bildes $A_{i+1}$, die entsprechend Zonen klassifiziert sind, welche während der Zeitspanne zwischen den Aufnahmen der zwei aufeinanderfolgenden Bilder $A_i$ und $A_{i+1}$ einem Verlust an Vegetation unterlagen, wobei der Satz $DV$ gleich dem Satz der Pixel $p_{xy}$ ist, die zu dem zweiten Satz $S_2$ gehören und welche nicht zu dem vierten Satz $S_4$ gehören:

$$DV = S_2 - S_4.$$

**2.** Verfahren nach Anspruch 1, **dadurch gekennzeichnet, dass** der eine oder die mehreren Erfassungsfrequenzkanäle zumindest zwei Infrarotkanäle sind.

**3.** Verfahren nach Anspruch 2, **dadurch gekennzeichnet, dass** die zumindest zwei Infrarotkanäle ein Nahes-Infrarot- oder NIR- (Near Infra Red)-Kanal und ein Kurzwellen-Infrarot- oder SWIR- (Short Wave Infra Red)-Kanal und/oder ein Mittleres-Infrarot- oder MIR- (Medium Infra Red)-Kanal sind.

**4.** Verfahren nach einem der vorhergehenden Ansprüche, **dadurch gekennzeichnet, dass** das Verfahren zuvor die durch den einen oder die mehreren passiven Spektralradiometer aufgenommenen Daten verarbeitet, um die $N$ Bilder $A_i$ mit $N \geq 2$ für $i = 1, 2, ..., N$ desselben geografischen Bereichs mit derselben Mehrzahl von Auflösungszellen oder Pixeln $p_{xy}$ und derselben Größe zu erhalten.

**5.** Verfahren nach einem der vorhergehenden Ansprüche, **dadurch gekennzeichnet, dass** im Schritt B permanente Reflektoren PRs als solche Auflösungszellen $p_{xy}$ bestimmt werden, welche in beiden Bildern $A_i$ und $A_{i+1}$ des Paares Werte der Reflexion $\rho$ in jedem einzelnen der einen oder der mehreren Kanäle aufweisen, welche dicht bebauten urbanen Bereichen entsprechen, die vorzugsweise keine oder wenig Vegetation in Bezug auf die Größe der Auflösungszellen wiedergeben.

**6.** Verfahren nach einem der vorhergehenden Ansprüche, **dadurch gekennzeichnet, dass** die eine oder die mehreren ersten Größen ($P$), die von einer Variation abhängen und die in den Schritten C, D, F und G berücksichtigt wurden, zumindest eine Größe umfassen, welche identisch gleich der entsprechenden Variation ist.

**7.** Verfahren nach einem der vorhergehenden Ansprüche, **dadurch gekennzeichnet, dass** die eine oder die mehreren ersten Größen ($P$), die von einer Variation abhängen und die in den Schritten C, D, F und G berücksichtigt wurden, zumindest einen Prozentsatz ($P$) der entsprechenden Variation umfassen.

**8.** Verfahren nach einem der vorhergehenden Ansprüche, **dadurch gekennzeichnet, dass** die eine oder die mehreren zweiten Größen ($\rho_{NIR}$, $\rho_{NIR} / \rho_{SWIR}$, $\rho_{NIR} / \rho_{MIR}$), die von zumindest einer Reflexion $\rho$ abhängen und die in den Schritten C, E, F und H berücksichtigt wurden, zumindest eine Größe umfassen, die identisch gleich der entsprechenden Reflexion $\rho$ ($\rho_{NIR}$) eines Kanals ist.

**9.** Verfahren nach einem der vorhergehenden Ansprüche, **dadurch gekennzeichnet, dass** die eine oder die mehreren zweiten Größen ($\rho_{NIR}$, $\rho_{NIR} / \rho_{SWIR}$, $\rho_{NIR} / \rho_{MIR}$), die von zumindest einer Reflexion $\rho$ abhängen und die in den Schritten C, E, F und H berücksichtigt wurden, zumindest ein Verhältnis zwischen zwei Reflexionen $\rho$ ($\rho_{NIR}$, $\rho_{NIR} / \rho_{SWIR}$, $\rho_{NIR} / \rho_{MIR}$) von zwei Kanälen umfassen.

**10.** Verfahren nach einem der vorhergehenden Ansprüche, **dadurch gekennzeichnet, dass** die aufgenommenen Daten die Strahlung $L$ von jedem einzelnen der $N$ Bilder $A_i$ auf jedem einzelnen des einen oder der mehreren Erfassungsfrequenzkanäle umfassen, und **dadurch**, dass das Verfahren, bevor der Schritt B ausgeführt wird, die Strahlung $L$ in die Reflexion $\rho$ für jeden einzelnen des einen oder der mehreren Kanäle transformiert ([1]).

**11.** Verfahren nach Anspruch 10, **dadurch gekennzeichnet, dass** die Transformation der Strahlung $L$ in die Reflexion $\rho$ die exo-atmosphärische solare Bestrahlungsstärke $E_0$ und den Einfluss des Sonnenzenitwinkels $\theta_Z$ berücksichtigt, wobei sie die Abschätzung des Strahlenwegs $L_P$, bevorzugt durch das DOS-Verfahren umfasst.

**12.** Verfahren nach einem der vorhergehenden Ansprüche, **dadurch gekennzeichnet, dass** zum Bestimmen des ersten Satzes $S_1$ in dem Schritt G und/oder des zweiten Satzes $S_2$ in dem Schritt H das Verfahren saisonale Unterschiede der Vegetation berücksichtigt.

**13.** Verfahren nach Anspruch 12, **dadurch gekennzeichnet, dass** das Verfahren saisonale Unterschiede der Vegetation durch die Verwendung von einem oder mehreren Korrekturfaktoren berücksichtigt.

**14.** Verfahren nach Anspruch 13, **dadurch gekennzeichnet, dass** der eine oder die mehreren Korrekturfaktoren von den Sonnenhöhenwinkeln $\theta_{SEL\_i}$ und $\theta_{SEL\_(i+1)}$ und/oder von deren Differenz ($\theta_{SEL\_i} - \theta_{SEL\_(i+1)}$) zu den Aufnahme-

zeitpunkten der zwei Bilder $A_i$ und $A_{i+1}$ abhängen.

**15.** Verfahren nach einem der Ansprüche 12 bis 14, **dadurch gekennzeichnet, dass** es die Schritte L, M und N nur ausführt, falls der folgende Testschritt ein positives Ergebnis liefert:

K. Testen, ob die zwei Bilder $A_i$ und $A_{i+1}$ des Paares während Jahreszeiten aufgenommen wurden, in denen die Vegetation in einem vergleichsweise blühenden Zustand ist, wohingegen, falls der Schritt K ein negatives Ergebnis ergibt, der folgende Schritt ausgeführt wird:

P. Bestimmen eines Satzes $DV$ der Auflösungszellen $p_{xy}$ des Bildes $A_{i+1}$, die entsprechend Zonen klassifiziert sind, welche einem Verlust an Vegetation während der Zeitspanne zwischen den Aufnahmen der zwei aufeinanderfolgenden Bilder $A_i$ und $A_{i+1}$ ausgesetzt waren, wobei der Satz $DV$ gleich dem zweiten Satz $S_2$ ist:

$$DV = S_2.$$

**16.** Verfahren nach Anspruch 15, **dadurch gekennzeichnet, dass** der Schritt K testet, ob die Sonnenhöhenwinkel $\theta_{SEL\_i}$ und $\theta_{SEL\ (i+1)}$ zu den Aufnahmezeitpunkten der zwei Bilder $A_i$ und $A_{i+1}$ beide höher oder beide niedriger sind als ein Schwellenwert $\Theta$.

**17.** Verfahren nach Anspruch 16, **dadurch gekennzeichnet, dass** der Schwellenwert $\Theta$ gleich 35° ist ($\Theta = 35°$).

**18.** Elektronische Vorrichtung zum Verarbeiten von Daten, die während einer bestimmten Zeitspanne über demselben geografischen Bereich durch Mittel eines oder mehrerer passiver Spektralradiometer auf einem oder mehreren Erfassungsfrequenzkanälen aufgenommen wurden, zum Bereitstellen einer Darstellung, insbesondere für verbrannte Bereiche ohne Vegetation, von N Bildern $A_i$, mit $N \geq 2$ für $i = 1, 2, ..., N$, wobei jedes Bild $A_i$ eine selbe Mehrzahl von Auflösungszellen oder Pixeln $p_{xy}$ umfasst, wobei die Vorrichtung umfasst:

eine Datenverarbeitungseinheit;
zumindest eine Speichereinheit, die mit der Datenverarbeitungseinheit verbunden ist; und
zumindest eine Eingang/Ausgang- oder I/O-Schnittstelle,, die mit der Datenverarbeitungseinheit verbunden ist,

wobei die elektronische Vorrichtung **dadurch gekennzeichnet ist, dass** sie das automatische Verfahren des Detektierens und Darstellens insbesondere für verbrannte Bereiche ohne Vegetation nach einem der Ansprüche 1 bis 17 ausführt.

**Revendications**

**1.** Procédé automatique de détection et de cartographie, notamment pour des zones brûlées sans végétation, dans N images $A_i$, avec $N \geq 2$ pour $i = 1, 2, ... N$, obtenues à partir de données acquises le long d'une certaine période de temps sur la même zone géographique au moyen d'un ou plusieurs radiomètres passifs spectraux sur un ou plusieurs canaux de fréquences de détection, chaque image $A_i$ comprenant une même pluralité de cellules de résolution ou pixels $p_{xy}$, la réflectance $\rho$ de chacun d'un dudit un ou plusieurs canaux étant disponible pour chaque image, **caractérisé en ce qu'**il comprend les étapes suivantes :

B. pour chaque paire d'images successives $A_i$ et $A_{i+1}$, pour $i = 1, 2, ..., N - 1$, on prend comme réflecteurs permanents PRs les cellules de résolution $p_{xy}$ qui ont des propriétés optiques et électromagnétiques constantes dans les deux images ;
C. pour chaque paire d'images successives $A_i$ et $A_{i+1}$, pour $i = 1, 2, ..., N - 1$, on calcule la moyenne $M_{PR\_P\_i}$ et la déviation standard $\sigma_{PR\_P\_i}$ d'une ou plusieurs premières quantités (P) en fonction de la variation de la ième image $A_i$ au temps successif de la $(i + 1)$ - ième image $A_{i+1}$ d'une ou plusieurs deuxièmes quantités ($\rho$NIR, $\rho$NIR / $\rho$SWIR, $\rho$NIR / $\rho$MIR) en fonction d'au moins une réflectance $\rho$ des réflecteurs permanents PRs dans un ou plusieurs canaux ;
D. on calcule la différence ($M_{PR\_P\_i}$ - $\sigma_{Pi}$) entre la $M_{PR\_p\_i}$ moyenne et la déviation standard $\sigma_{PR\_P\_i}$, calculée dans l'étape C pour chacune de ladite une ou plusieurs premières quantités (P) ;
E. on calcule les valeurs moyennes $M_{PR\_\rho}$ de ladite une ou plusieurs deuxièmes quantités ($\rho$NIR, $\rho$NIR / $\rho$SWIR, $\rho$NIR / $\rho$MIR) en fonction d'au moins une réflectance $\rho$ des réflecteurs permanents PRs dans un ou plusieurs canaux dans chacune des deuxièmes images $A_{i+1}$ des paires d'images successives ($A_i$ et $A_{i+1}$) pour i = 1, 2, ..., N - 1 ;

F. pour chaque cellule de résolution $p_{xy}$, on calcule ladite une ou plusieurs quantités ($P_{xy}$) déjà considérées dans l'étape C pour les réflecteurs permanents PRs en fonction de la variation de la ième image $A_i$ au temps successif de la (i + 1) ième image $A_{i+1}$ desdites une ou plusieurs deuxièmes quantités ($\rho$NIR, $\rho$NIR / $\rho$SWIR, $\rho$NIR / $\rho$MIR) en fonction d'au moins une réflectance $\rho$ des pixels $p_{xy}$ dans lesdits un ou plusieurs canaux ;

G. on détermine un premier groupe $S_1$ de cellules de résolution $p_{xy}$ de l'image $A_{i+1}$ comprenant les cellules de résolution $p_{xy}$ de l'image $A_{i+1}$ pour laquelle lesdites une ou plusieurs premières quantités ($P_{xy}$) calculées dans l'étape F sont inférieures dans chacun desdits un ou plusieurs canaux à la différence ($M_{PR\_P\_i}$ - $\sigma_{Pi}$) calculée dans l'étape D pour chaque quantité correspondante (P) desdites une ou plusieurs premières quantités (P) en fonction des réflecteurs permanents PRs ;

H. on détermine un deuxième groupe $S_2$ de cellules de résolution $p_{xy}$ de l'image $A_{i+1}$ comprenant les cellules de résolution $P_{xy}$ de l'image $A_{i+1}$ pour i = 1, 2, ..., N - 1) pour laquelle lesdites une ou plusieurs deuxièmes quantités ($\rho$NIR, $\rho$NIR / $\rho$SWIR, $\rho$NIR / $\rho$MIR) en fonction d'au moins une réflectance $\rho$ de la cellule de résolution $p_{xy}$ dans lesdits un ou plusieurs canaux dans chacune des deuxièmes images $A_{i+1}$ des paires d'images successives pour i = 1, 2, ..., N - 1 est/sont inférieure(s) à toutes les valeurs moyennes $M_{PR\_\rho}$ d'une ou plusieurs deuxièmes quantités correspondantes ($\rho$NIR, $\rho$NIR / $\rho$SWIR, $\rho$NIR / $\rho$MIR) des réflecteurs permanents PRs calculés dans l'étape E ;

I. on détermine un troisième groupe $S_3$ de cellules de résolution $p_{xy}$ de l'image $A_{i+1}$ égal au groupe résultant de l'intersection du premier groupe $S_1$ au deuxième groupe $S_2$ :

$$S_3 = S_1 \cap S_2 ;$$

J. on détermine un groupe DB des cellules de résolution $p_{xy}$ de l'image $A_{i+1}$ classé comme correspondant aux zones qui ont été soumises à une diminution de teneur de biomasse ou à une augmentation dans le sol ou la couverture minérale pendant l'intervalle de temps entre les acquisitions des deux images successives $A_i$ et $A_{i+1}$, le groupe DB étant égal au groupe des pixels $p_{xy}$ appartenant au premier groupe $S_1$ qui n'appartient pas au troisième groupe $S_3$ ;

$$DB = S_1 - S_3 ;$$

L. on détermine dans le troisième groupe $S_3$ un quatrième groupe $S_4 \subseteq S_3$ des cellules de résolution $p_{xy}$ correspondant aux zones fournies avec une végétation "brûlable" dans les premières images $A_i$ des paires des images successives pour i = 1, 2, ..., N - 1 ;

M. on détermine un groupe BA des cellules de résolution $p_{xy}$ de l'image $A_{i+1}$ classé comme correspondant aux zones qui ont été soumises à un feu pendant l'intervalle de temps entre l'acquisition de l'image $A_i$ et l'acquisition de l'image $A_{i+1}$, le groupe BA étant égal au quatrième groupe $S_4$:

$$BA = S_4 ; et$$

N. on détermine un groupe DV des cellules de résolution $p_{xy}$ de l'image $A_{i+1}$ classé comme correspondant aux zones qui ont été soumises à une perte de végétation pendant l'intervalle de temps entre les acquisitions des deux images successives $A_i$ et $A_{i+1}$, le groupe DV étant égal au groupe de pixels $p_{xy}$ appartenant au deuxième groupe $S_2$ qui n'appartient pas au quatrième groupe $S_4$ ;

$$DV = S_2 - S_4.$$

2. Procédé selon la revendication 1, **caractérisé en ce que** lesdits un ou plusieurs canaux de fréquences de détection sont au moins deux canaux infrarouges.

3. Procédé selon la revendication 2, **caractérisé en ce que** lesdits au moins deux canaux infrarouges sont un canal à infrarouge proche ou NIR (infrarouge proche) et un canal à infrarouge à onde courte ou SWIR (infrarouge à ondes courtes) et/ou un canal à infrarouge moyen ou MIR (infrarouge moyen).

**4.** Procédé selon l'une quelconque des revendications précédentes, **caractérisé en ce que** le procédé traite de façon préliminaire les données acquises par lesdits un ou plusieurs radiomètres passifs spectraux pour obtenir lesdites N images $A_1$ avec $N \geq 2$ pour $i = 1, 2, ..., N$ de la même zone géographique ayant la même pluralité de cellules de résolution ou pixels $p_{xy}$ et la même dimension de celle-ci.

**5.** Procédé selon l'une quelconque des revendications précédentes, **caractérisé en ce que** dans l'étape B les réflecteurs permanents PRs sont déterminés comme ceux des cellules de résolution $p_{xy}$ qui, dans les deux images $A_i$ et $A_{i+1}$ de la paire ont des valeurs de réflectance $\rho$ dans chacun desdits un ou plusieurs canaux qui correspondent aux zones urbaines construites de façon dense, présentant de préférence pas ou peu de végétation par rapport à la dimension des cellules de résolution.

**6.** Procédé selon l'une quelconque des revendications précédentes, **caractérisé en ce que** lesdites une ou plusieurs premières quantités (P) en fonction d'une variation, considérées dans les étapes C,D, F et G, comportent au moins une quantité identiquement égale à la variation correspondante.

**7.** Procédé selon l'une quelconque des revendications précédentes, **caractérisé en ce que** lesdites une ou plusieurs premières quantités (P) en fonction d'une variation, considérées dans les étapes C,D, F et G, comportent au moins un pourcentage (P) de la variation correspondante.

**8.** Procédé selon l'une quelconque des revendications précédentes, **caractérisé en ce que** lesdites une ou plusieurs deuxièmes quantités ($\rho$NIR, $\rho$NIR / $\rho$SWIR, $\rho$NIR / $\rho$MIR) en fonction d'au moins une réflectance $\rho$, considérées dans les étapes C, E, F et H comportent au moins une quantité identiquement égale à la réflectance correspondante $\rho$ ($\rho$NIR) d'un canal.

**9.** Procédé selon l'une quelconque des revendications précédentes, **caractérisé en ce que** lesdites une ou plusieurs deuxièmes quantités ($\rho$NIR, $\rho$NIR / $\rho$SWIR, $\rho$NIR / $\rho$MIR) en fonction d'au moins une réflectance p, considérées dans les étapes C, E, F et H comportent au moins un rapport entre deux réflectances $\rho$ ($\rho$NIR / $\rho$SWIR, $\rho$NIR / $\rho$MIR) de deux canaux.

**10.** Procédé selon l'une quelconque des revendications précédentes, **caractérisé en ce que** les données acquises comportent la radiance L de chacune des N images $A_i$ sur chacun desdits un ou plusieurs canaux de fréquences de détection et **en ce que** le procédé, avant la mise en oeuvre de l'étape B, transforme ([1]) la radiance L en la réflectance p pour chacun desdits un ou plusieurs canaux.

**11.** Procédé selon la revendication 10, **caractérisé en ce que** la transformation de la radiance L en la réflectance p prend en considération l'irradiance solaire exo-atmosphérique $E_0$ et les effets de l'angle zénithal du soleil $\theta_z$ et il comprend l'estimation de la radiance de trajectoire $L_p$, de préférence par le procédé DOS.

**12.** Procédé selon l'une quelconque des revendications précédentes, **caractérisé en ce que** pour déterminer le premier groupe $S_1$ dans l'étape G et/ou le deuxième groupe $S_2$ dans l'étape H, le procédé prend en considération les différences saisonnières de végétation.

**13.** Procédé selon la revendication 12, **caractérisé en ce que** le procédé prend en considération les différences saisonnières de végétation par l'intermédiaire de l'utilisation d'un ou plusieurs facteurs de correction.

**14.** Procédé selon la revendication 13, **caractérisé en ce que** lesdits un ou plusieurs facteurs de correction dépendent des angles d'élévation solaire $\theta_{SEL\_i}$ et $\theta_{SEL\_(i+1)}$ et/ou de leur différence ($\theta_{SEL\_i} - \theta_{SEL\_(i+1)}$ aux instants d'acquisition des deux images $A_i$ et $A_{i+1}$.

**15.** Procédé selon l'une quelconque des revendications 12 à 14, **caractérisé en ce qu'**il met en oeuvre les étapes L, M et N seulement si l'étape de vérification suivante donne une réponse positive :

K. on vérifie que les deux images $A_i$ et $A_{i+1}$ de la paire ont été acquises dans les périodes de l'année dans lesquelles la végétation est dans un état de floraison comparable ;
tandis que dans le cas dans lequel l'étape K donne une réponse négative, on réalise l'étape suivante :
P. on détermine un groupe DV des cellules de résolution $p_{xy}$ de l'image $A_{i+1}$ classé comme correspondant aux zones qui ont été soumises à une perte de végétation pendant l'intervalle de temps entre les acquisitions des deux images successives $A_i$ et $A_{i+1}$, le groupe DV étant égal au deuxième groupe $S_2$ :

$$DV = S_2.$$

**16.** Procédé selon la revendication 15, **caractérisé en ce que** l'étape K vérifie si oui ou non les angles d'élévation solaire $\theta_{SEL\_i}$ et $\theta_{SEL\_(i+1)}$ aux instants d'acquisition des deux images $A_i$ et $A_{i+1}$ sont tous deux supérieurs ou tous deux inférieurs à une valeur de seuil $\Theta$.

**17.** Procédé selon la revendication 16, **caractérisé en ce que** ladite valeur de seuil $\Theta$ est égale à 35° ($\Theta = 35°$).

**18.** Appareil électronique pour traiter des données acquises au cours d'une certaine période de temps sur la même zone géographique au moyen d'un ou plusieurs radiomètres passifs spectraux sur un ou plusieurs canaux de fréquences de détection pour fournir une cartographie, en particulier pour les zones brûlées sans végétation de N images $A_i$, avec $N \geq 2$ pour i = 1, 2, ..., N, chaque image $A_i$ comprenant une même pluralité de cellules de résolution ou pixels $p_{xy}$, l'appareil comprenant :

une unité de traitement de données ;
au moins une unité de mémoire reliée à ladite unité de traitement de données ; et
au moins une entrée/sortie ou interface entrée/sortie reliée à ladite unité de traitement de données,
l'appareil électronique étant **caractérisé en ce qu'**il exécute le procédé automatique de détection et de cartographie, notamment pour les zones brûlées sans végétation selon l'une quelconque des revendications 1 à 17.

A — $L \longrightarrow \rho$

B — PR

C — $M_{PR\_P}$, $\sigma_{PR\_P}$

D — $M_{PR\_P} - \sigma_{PR\_P}$

E — $M_{\rho PR}$, $A_{i+1}$

F — Pxy

G — $S_1 = \{p_{xy} \mid P_{xy} < (M_{PR\_P} \quad \sigma_{PR\_P}$

H — $S_2 = \{p_{xy} \mid \rho_{xy} < M\rho_{PR}, \quad A_{i+1}$

I — $S_3 = S_1 \cap S_2$

J — $DB = S_1 - S_3$

K — $\theta_{SEL\ i,i+1} > \Theta°$
o
$\theta_{SEL\ i,i+1} < \Theta°$

SI

L — $S_4 = \{p_{xy} \mid p_{xy} \in S_3$

$\rho_{xy} \in$ forest, semi-natural agro-forest, cultivations. }

M — BA = S4

N — DV=S2-S4

NO

P — DV=S2

END

Fig. 1

Fig. 2

Fig. 3

Fig. 4

Fig.5

Fig. 6

Fig. 7

Fig. 8

Fig. 9

Fig. 10